# EUROPEAN PATENT SPECIFICATION

(11) **EP 3 139 472 B1**
(45) Date of publication and mention of the grant of the patent: **18.04.2018**
(21) Application number: 16185916.0
(22) Date of filing: 26.08.2016
(51) Int. Cl.: H02K 1/28, H02K 1/27, H02K 15/02

(54) **ROTOR FOR ROTARY ELECTRIC MACHINE**
ROTOR FÜR ELEKTRISCHE DREHMASCHINEN
ROTOR POUR MACHINE TOURNANTE ÉLECTRIQUE

(30) Priority: 03.09.2015 JP 2015173821
(43) Date of publication of application: 08.03.2017
(73) Proprietor: Toyota Jidosha Kabushiki Kaisha, Toyota-shi, Aichi 471-8571 (JP)
(72) Inventor: MATSUMOTO, Masashi, Toyota-shi, Aichi 471-8571 (JP); SHIRASAKI, Yasuaki, Toyota-shi, Aichi 471-8571 (JP); NAKATANI, Akira, Toyota-shi, Aichi 471-8571 (JP)
(74) Representative: TBK

(56) References cited:
- EP-A1- 2 034 197
- FR-A1- 2 957 991
- GB-A- 881 308
- JP-A- 2013 046 521
- JP-A- 2014 176 218
- JP-A- 2015 019 493
- JP-A- 2016 093 015

## Description

### BACKGROUND OF THE INVENTION

### 1. Field of the Invention

The disclosure relates to a rotor for a rotary electric machine, and, in more detail, relates to a rotor for a rotary electric machine, which is provided with a rotor core, a rotor shaft inserted into the rotor core, and a nut screwed into the rotor shaft, and is used for a rotary electric machine.

### 2. Description of Related Art

Conventionally, as this type of rotor for a rotary electric machine, a rotor including an armature core, a shaft, and a nut is proposed (for example, see Japanese Patent Application Publication No. 2002-95197 (JP 2002-95197 A)). In the armature core, a cylindrical center hole is provided, and an inner wall forming the center hole has projections. The shaft is inserted into the center hole of the armature core. In the shaft, thread ridges, into which the nut is screwed, and recessed grooves are formed. The recessed grooves extend in an axis direction of the shaft and have shapes that allow the projections of the armature core to enter the grooves. In this rotary electric machine, as the projections of the armature core enter the recessed grooves, the rotor is restrained from rotating with respect to the shaft. Further, as the nut is screwed into the thread ridges in the state where the shaft is inserted into the armature core, and the nut is fastened towards the armature core, it is possible to fix the armature core to the shaft sufficiently.

In the rotor for a rotary electric machine stated above, in which the nut screwed into the thread ridges of the rotor shaft is used to fix the rotor core to the rotor shaft, the thread ridges of the rotor shaft are required to have strength. On the other hand, grooves are commonly formed in the rotor shaft so that projecting portions on an inner peripheral surface of the rotor core enter the grooves. Further, in order to restrain a nut from loosening, it is considered that grooves are provided in the rotor shaft for crimping the nut and the nut is crimped. When such grooves are formed in the rotor shaft, there are no thread ridges of the rotor shaft in areas where the grooves are formed. Therefore, when the grooves for crimping the nut are formed separately from the grooves that receive the projecting portions on the inner peripheral surface of the rotor core in the rotor shaft, there are many areas where no thread ridges of the shaft are present. This could make it impossible to ensure sufficient strength of the thread ridges. Conventionally, the rotor shaft is extended in axial length so as to provide sufficient thread ridges and sufficient room for crimping the nut.

JP 2015.019493 relates to a motor which comprises a rotor and shaft. The rotor is provided in which a plurality of discs including a center hole and a projection arranged at the edge of the center hole are laminated gradually staggering the position of the projection by a fixed amount in a circumferential direction. A through hole of the rotor is formed by laminating the center holes and a protrusive streak slant with respect to an axis is formed by laminating the projections. The shaft extended parallel to the axis includes a shaft side groove engaged with the protrusive streak. A wedge member is filled into interspace between a side face of the protrusive streak and a side face of the shaft side groove.

GB 881 308 A discloses a bolt having a reduced diameter part at the end remote from the head formed with axial recesses or flats spaced around the periphery, which receives a nut having a thin cylindrical extension around part. The free edge of the extension is bent inwards to engage the recesses or flats resiliently. Part may be formed by partial or complete removal of the bolt threads.

### SUMMARY OF THE INVENTION

The disclosure provides a rotor for a rotary electric machine, which ensures strength of an external thread portion where thread ridges are provided, while restraining a nut from loosening.

The rotor for a rotary electric machine according to the disclosure employs the following means in order to achieve the main object stated above.

A rotor for a rotary electric machine according to the disclosure includes a rotor core provided with a cylindrical hole having a cylindrical shape, a rotor shaft having an insertion portion that is inserted into the cylindrical hole of the rotor core, and an external thread portion that extends from the insertion portion to an outer side in an axis direction and has a thread ridge on an outer peripheral surface, and a nut that is screwed into or onto the external thread portion, and the rotor for a rotary electric machine is used for a rotary electric machine. On an inner peripheral surface of the cylindrical hole of the rotor core, a radially projecting portion is provided. On an outer peripheral surface of the rotor shaft, a groove for a projecting portion, where the projecting portion is inserted, is provided so as to extend in the axis direction from the external thread portion through the insertion portion, and a crimped portion is provided in the nut, the crimped portion being crimped so as to enter the groove for a projecting portion.

In the rotor for a rotary electric machine according to the disclosure, the projecting portion is provided in the inner peripheral surface of the rotor core, the groove for a projecting portion, which is fitted to the projecting portion, is provided on the outer peripheral surface of the rotor shaft so as to extend from the external thread portion through the insertion portion in the axis direction, and the nut is provided with the crimped portion that is crimped so as to enter the groove for a projecting portion. Thus, it is possible to crimp and fix the nut to the rotor shaft, thereby restraining the nut from loosening. Further, since it is not necessary to provide a groove for the crimped portion to enter, in addition to the groove for a projecting portion, an increase in areas of the external thread portion without the thread ridge is restrained. As a result, it is possible to ensure strength of the external thread portion provided with the thread ridge, while restraining the nut from loosening. Moreover, since the diameter of the thread ridges can be increased by providing the groove for inserting the projecting portion of the rotor core, the amount of thread ridges per unit length of the threaded portion in axial direction (axis direction) can be increased which results in the possibility of further reducing the axial length of the threaded portion, i.e. the rotor shaft.

In the foregoing rotor for a rotary electric machine according to the disclosure, the rotor shaft may be provided with a crimping groove in the external thread portion at a position separated from the groove for a projecting portion particularly in the circumferential direction of the rotor shaft, and the nut may be provided with a first crimped portion that is crimped so as to enter the groove for a projecting portion, and a second crimped portion that is crimped so as to enter the crimping groove. Thus, it is possible to further restrain the nut from loosening while restraining deterioration of thread strength of the external thread portion.

Further, in the rotor for a rotary electric machine according to the disclosure, the rotor shaft is provided with a crimping groove at a position that overlaps the groove for a projecting portion in the external thread portion, and the nut is provided with a crimped portion crimped so as to enter the crimping groove and the groove for a projecting portion. The first groove has a larger groove cross-section perpendicular to the axis direction in the region of the external thread portion than in the region of the insertion portion.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a structural view showing a rough structure of a rotor 20 as an example of the disclosure;
FIG. 2 is an explanatory view for explaining a state of a rotor core 22 seen in direction A in FIG. 1;
FIG. 3 is an explanatory view for explaining states of a rotor shaft 30 and a nut 50 seen in direction A in FIG. 1;
FIG. 4 is an enlarged view in which a main portion of the rotor 20 is enlarged;
FIG. 5 is an enlarged view in which a main portion of the rotor shaft 30 is enlarged and seen in direction B in FIG. 3;
FIG. 6 is an explanatory view for explaining depths of a key groove 42a and a crimping groove 44a;
FIG. 7 is an enlarged view in which the main portion of the rotor shaft 30 is enlarged and seen in direction C in FIG. 3;
FIG. 8 is an explanatory view for explaining a depth of a crimping groove 44b;
FIG. 9 is an explanatory view for explaining a state where a crimped portion 50a is formed; and
FIG. 10 is an explanatory view of a state of the nut 50 before and after crimping.

### DETAILED DESCRIPTION OF EMBODIMENTS

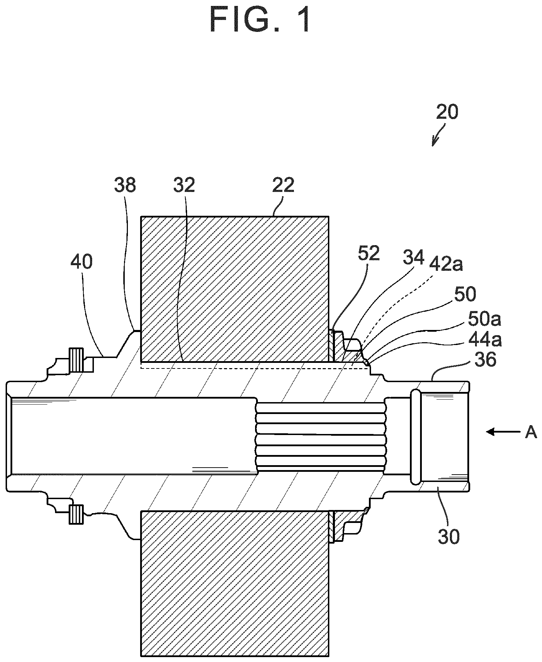

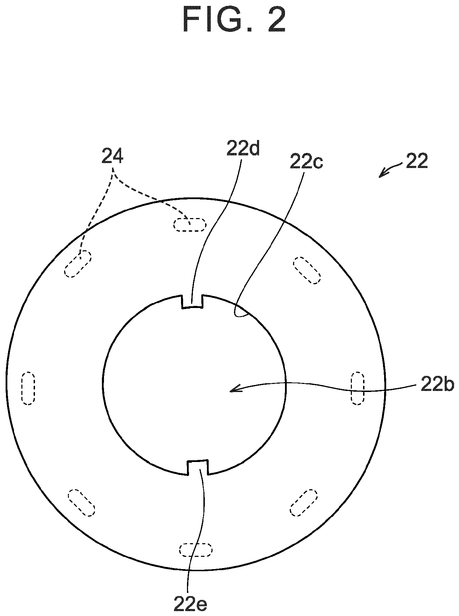

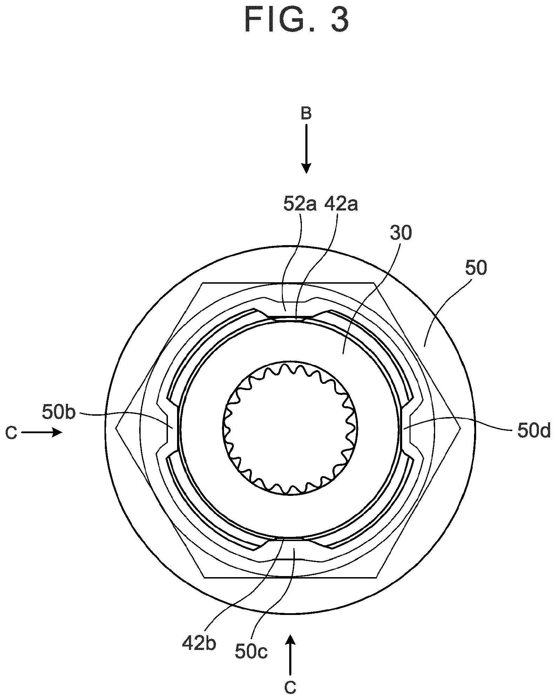

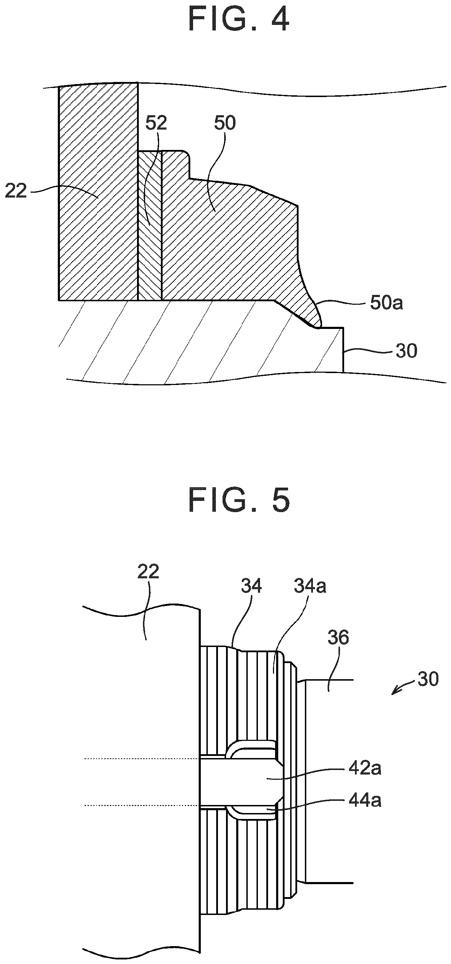

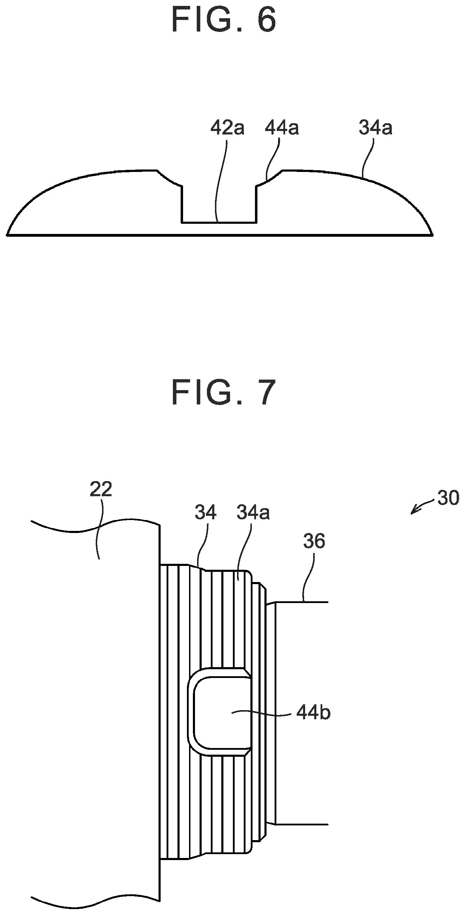

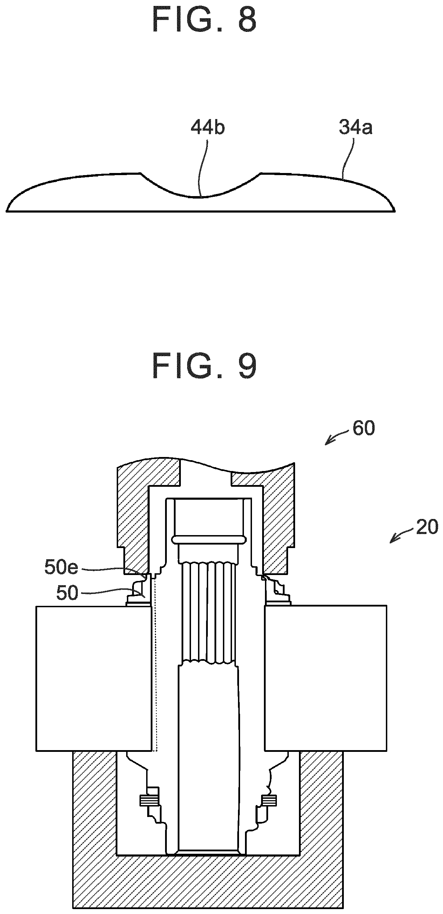

FIG. 1 is a structural view showing a rough structure of a rotor 20 as an example of a rotor for a rotary electric machine according to the disclosure. FIG. 2 is an explanatory view for explaining a state of a rotor core 22 seen in direction A in FIG. 1. FIG. 3 is an explanatory view for explaining states of a rotor shaft 30 and a nut 50 seen in direction A in FIG. 1. FIG. 4 is an enlarged view in which a main portion of the rotor 20 is enlarged. FIG. 5 is an enlarged view in which a main portion of the rotor shaft 30 is enlarged and seen in direction B in FIG. 3. FIG. 6 is an explanatory view for explaining depths of a key groove 42a and a crimping groove 44a being a first groove of the invention. FIG. 7 is an enlarged view in which the main portion of the rotor shaft 30 is enlarged and seen in direction C in FIG. 3. FIG. 8 is an explanatory view for explaining a depth of a crimping groove 44b. The rotor 20 is used as a motor together with a stator (not shown).

As shown in FIG. 1 and FIG. 2, the rotor 20 is provided with a cylindrical rotor core 22, permanent magnets 24 inserted into a plurality of slots, respectively, of the rotor core 22, a rotor shaft 30 on which the rotor core 22 is mounted, a nut 50 used to mount the rotor core 22 on the rotor shaft 30, and a washer 52 inserted between the nut 50 and the rotor core 22.

As shown in FIG. 1 and FIG. 2, the rotor core 22 is structured by laminating a plurality of annular rotor members that are formed by punching a non-oriented electromagnetic steel sheet, and a cylindrical hole 22b having a cylindrical shape is provided in the center portion of the rotor core 22. Keys 22d, 22e are provided in an inner peripheral surface 22c of the rotor core 22. The keys 22d, 22e are formed as radially projecting portions that come into contact with the rotor shaft 30. The keys 22d, 22e are arranged at an angle of 180 degrees in the circumferential direction of the cylindrical hole 22b. This provides an even weight distribution so as to not generate an imbalance.

As shown in FIG. 1 and FIG. 3 ∼ FIG. 8, the rotor shaft 30 includes an insertion portion 32 inserted into the cylindrical hole 22b of the rotor core 22, an external thread portion 34, which extends from the insertion portion 32 to the right direction in FIG. 1 and has thread ridges 34a into which the nut 50 is screwed, the thread ridges 34a being provided on an outer peripheral surface of the external thread portion 34, an end portion 36 extending from the external thread portion 34 to the right direction in FIG. 1, a contact portion 38, which continues from the left end of the insertion portion 32 in FIG. 1 and comes into contact with the left end surface of the rotor core 22 which is the leading end when sliding the rotor core onto the rotor shaft, and an end portion 40 extending from the contact portion 38 to the left direction in FIG. 1. On an outer peripheral surface of the rotor shaft 30, key grooves 42a, 42b are provided from the external thread portion 34 through the insertion portion 32. The keys 22d, 22e of the rotor core 22 are inserted into the key grooves 42a, 42b, respectively. Thus, rotation of the rotor core 22 with respect to the rotor shaft 30 is restricted when the keys 22d, 22e of the rotor core 22 are inserted into the key grooves 42a, 42b. Crimping grooves 44a ∼ 44d are provided in the external thread portion 34. As shown in FIG. 1 and FIG. 5, the crimping groove 44a is formed at a position overlapping the key groove 42a. In other words, the groove cross-section of the crimping groove 44a overlaps the groove cross-section of the key groove 42a when viewed in the axial direction. Hence, as can be seen in Fig. 6, key groove 42a has a greater depth than crimping groove 44a and crimping groove 44a has a greater width than key groove 42a. For that reason there is an area in which the key groove 42a and the crimping groove 44a overlap when seen in the axial direction. Similarly to the crimping groove 44a, the crimping groove 44c is formed at a position overlapping the key groove 42b. The crimping grooves 44b, 44d being the second grooves of the invention are arranged at positions separated from the key grooves 42a, 42b and at angles of 90 degrees with respect to the neighboring crimping grooves 44a, 44b in the circumferential direction of the rotor shaft 30. In short, the crimping grooves 44a ∼ 44d are arranged at an angle of 90 degrees from each other in the circumferential direction of the rotor shaft 30. The crimping grooves 44a ∼ 44d are formed so that lengths in the horizontal direction in FIG. 1 become smaller than those of the key grooves 42a, 42b, depths become smaller than those of the key grooves 42a, 42b, and lengths in the vertical direction in FIG. 5 become larger than those of the key grooves 42a, 42b.

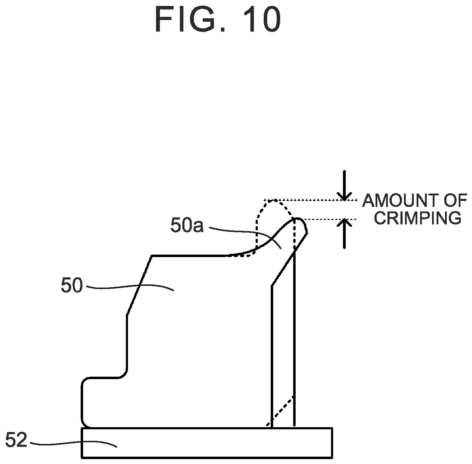

As shown in FIG. 1, FIG. 3, and FIG. 4, the nut 50 is screwed into the thread ridges 34a of the external thread portion 34 of the rotor shaft 30. The nut 50 makes a pair with the contact portion 38 to press and support the rotor core 22 through the washer 52, thereby restricting movements of the rotor core 22 with respect to the rotor shaft 30 in an axis direction of the rotor core 22. The nut 50 has crimped portions 50a ∼ 50d that are crimped so as to enter the crimping grooves 44a ∼ 44d, respectively. The crimping grooves 44a, 44c are formed at positions that overlap the key grooves 42a, 42b, respectively. Therefore, the crimped portions 50a, 50c enter portions of the key grooves 42a, 42b, respectively. FIG. 9 is an explanatory view for explaining a state where the crimped portion 50a is formed. FIG. 10 is an explanatory view of a state of the nut 50 before and after crimping. In FIG. 10, the broken line shows a state of an end portion 50e of the nut 50 before crimping, and the solid line shows a state of the nut 50 after the end portion 50e has been crimped. As shown in FIG. 9 and FIG. 10, the crimped portions 50a ∼ 50d are formed by pressing end portions (for example, the end portion 50e and so on) corresponding to the crimping grooves 44a ∼ 44b by using a crimping tool 60 from above in the drawing in a state where the nut 50 is fastened to the rotor shaft 30, so that the end portions enter the crimping grooves 44a∼44b. Namely, the nut 50 is crimped and fixed to the rotor shaft 30. By this crimping fixation, loosening of the nut 50 is restrained.

In the rotor 20 according to the example structured as stated above, the crimping grooves 44b, 44d are formed at positions separated from the key grooves 42a, 42b, and the crimped portions 50b, 50d are formed in the nut 50 and crimped so as to enter the crimping grooves 44b, 44d, respectively. Therefore, compared to a rotor in which the nut 50 is crimped and fixed to the rotor shaft 30 only by the crimped portions 50a, 50c, it is possible to prevent loosening of the nut 50 further.

The crimping grooves 44a, 44c are formed in the external thread portion 34 at positions which overlap the key grooves 42a, 42b, respectively. Therefore, compared to a rotor in which all crimping grooves are formed at positions separated from the key grooves 42a, 42b, it is possible to allow more thread ridges to remain. Thus, it is possible to restrain deterioration of strength of the external thread portion 34.

In the rotor for a rotary electric machine according to the example described so far, the crimping grooves 44a, 44c are formed in the external thread portion at positions that overlap the key grooves 42a, 42b, the crimping grooves 44b, 44d are formed in the external thread portion at positions separated from the key grooves 42a, 42b, and the crimped portions 50a ∼ 50d are formed in nut 50. Thus, it is possible to restrain deterioration of strength of the external thread portion 34 while restraining the nut 50 from loosening.

In the rotor 20 according to the example, the crimping grooves 44a ∼ 44b have smaller depths than those of the key grooves 42a, 42b. However, the depths of the crimping grooves 44a ∼ 44b may be the same as those of the key grooves 42a, 42b.

In the rotor 20 according to the example, the crimping grooves 44a, 44c are provided at positions that overlap the key grooves 42a, 42b. However, the crimping grooves 44a, 44c may not be provided, and the rotor may have a shape in which the crimped portions 50a, 50c of the nut 50 enter the key grooves 42a, 42b, respectively.

In the example, the rotor core 22 is an example of a "rotor core", and the rotor shaft 30 is an example of a "rotor shaft", and the nut 50 is an example of a "nut".

One part 42a, 42b of first groove 42a, 44a, 42b, 44b into which projecting portion 22d, 22e is inserted has a greater depth in radial direction of the rotor shaft than the other part 44a, 44b of first groove 42a, 44a, 42b, 44b into which the first crimped portion (50a, 50c) enters. However, it is clear that the "one part 42a, 42b of first groove 42a, 44a, 42b, 44b" being the key groove has a constant depth as regards to the insertion portion 32 and the external thread portion 34, because otherwise the keys could not be inserted through the external thread portion. Namely, in the axial region of the external thread portion 34 the one part and the other part of the first groove is formed. In the axial region of the insertion portion 32, however, only the one part of the first groove is formed. Further, the other part (44a, 44b) of first groove (42a, 44a, 42b, 44b) may have a greater width in circumferential direction of the rotor shaft than the one part (42a, 42b) of first groove (42a, 44a, 42b, 44b).

The invention is applicable to a manufacturing industry of a rotor for a rotary electric machine, and so on.

In the rotor for a rotary electric machine, the rotor shaft 30 is provided with the external thread portion 34 in which the thread ridges 34a, into which the nut is screwed, are provided in the outer peripheral surface of the external thread portion 34. Also, the crimping groove 44a is formed at a position that overlaps the key groove 42a of the external thread portion 34. Then, the crimped portion is provided in the nut and crimped so as to enter the crimping groove 44a, and the nut is crimped and fixed to the rotor shaft 30 by the crimped portion. This makes it possible to restrain the nut from loosening. Moreover, compared to a rotor in which a crimping groove is formed at a position different from the key groove 42a, more thread ridges are allowed to remain, thereby restraining deterioration of strength of the external thread portion 34.

A rotor (20) includes a rotor core (22) and a rotor shaft (30). The rotor shaft (30) includes an insertion portion (32), an external thread portion (34), a grove (42a, 44a, 42b, 44b) and a nut (50). The insertion portion (32) is inserted into a cylindrical hole (22b) of the rotor core (22). The external thread portion (34) extends from the insertion portion (32) to an outer side in an axis direction. The external thread portion (34) has a thread ridge (34a) on an outer peripheral surface. The first groove (42a, 44a, 42b, 44b) is provided on an outer peripheral surface of the rotor shaft so as to extend in an axis direction from the external thread portion (34) through the insertion portion (32). The nut (50) is screwed into the external thread portion (34), and has a first crimped portion (50a, 50c) crimped so as to enter the groove (42a, 44a, 42b, 44b).

## Claims

1. A rotor (20) for a rotary electric machine, the rotor (20) comprising:
a rotor core (22) having a cylindrical hole (22b), the rotor core (22) having a radially projecting portion (22d, 22e) on an inner peripheral surface of the cylindrical hole (22b);
a rotor shaft (30) including;
an insertion portion (32) that is inserted into the cylindrical hole (22b) of the rotor core (22),
an external thread portion (34) that extends from the insertion portion (32) to an outer side in an axis direction, the external thread portion (34) having a thread ridge (34a) on an outer peripheral surface, and
a first groove (42a, 44a, 42b, 44b) into which the projecting portion (22d, 22e) is inserted, the first groove (42a, 44a, 42b, 44b) being provided on an outer peripheral surface of the rotor shaft so as to extend in an axis direction through the external thread portion (34) to the insertion portion (32); and
a nut (50) screwed into the external thread portion (34),
**characterized in that**
the nut (50) has a first crimped portion (50a, 50c) crimped so as to enter the first groove (42a, 44a, 42b, 44b), and
one part (42a, 42b) of first groove (42a, 44a, 42b, 44b) into which projecting portion (22d, 22e) is inserted has a greater depth in radial direction of the rotor shaft than the other part (44a, 44b) of first groove (42a, 44a, 42b, 44b) into which the first crimped portion (50a, 50c) enters.

2. The rotor (20) according to claim 1, wherein
the rotor shaft has a second groove (44b, 44d) in the external thread portion (34) at a position separated from the first groove (42a, 44a, 42b, 44b), and
the nut (50) has a second crimped portion (50b, 50d) that is crimped so as to enter the second groove (44b, 44d).

3. The rotor (20) according to claim 1, wherein the other part (44a, 44b) of first groove (42a, 44a, 42b, 44b) has a greater width in circumferential direction of the rotor shaft than the one part (42a, 42b) of first groove (42a, 44a, 42b, 44b).

4. The rotor (20) according to claim 1 or 3, wherein the one part (42a, 42b) of first groove (42a, 44a, 42b, 44b) is formed in an axial region of the insertion portion (32) and the external thread portion (34), and wherein the other part (44a, 44b) of first groove (42a, 44a, 42b, 44b) is only formed in an axial region of the external thread portion (34).

5. The rotor (20) according to claim 1, wherein the first groove (42a, 44a, 42b, 44b) has a larger groove cross-section perpendicular to the axis direction in the region of the external thread portion (34) than in the region of the insertion portion (32).

6. The rotor (20) according to any one of claims 1 to 5, wherein two radially projecting portions (22d, 22e) are arranged at an angle of 180 degrees in the circumferential direction of the cylindrical hole (22b) of the rotor core (22).

7. The rotor (20) according to any one of claims 1 to 6, wherein second grooves (44b, 44d) are arranged at positions separated from the first grooves (42a, 44a, 42b, 44b) and at angles of 90 degrees with respect to neighboring second grooves (44a, 44b) in the circumferential direction of the rotor shaft (30).

## Patentansprüche

1. Rotor (20) für eine elektrische Drehmaschine, wobei der Rotor (20) Folgendes aufweist:
einen Rotorkern (22) mit einem zylindrischen Loch (22b), wobei der Rotorkern (22) einen radial vorragenden Abschnitt (22d, 22e) auf einer Innenumfangsfläche des zylindrischen Lochs (22b) hat;
eine Rotorwelle (30), die Folgendes aufweist:
einen Einsetzabschnitt (32), der in das zylindrische Loch (22b) des Rotorkerns (22) eingesetzt ist,
einen Außengewindeabschnitt (34), der sich von dem Einsetzabschnitt (32) zu einer äußeren Seite in einer Achsenrichtung erstreckt, wobei der Außengewindeabschnitt (34) einen Gewindekamm (34a) an einer Außenumfangsfläche hat, und
eine erste Nut (42a, 44a, 42b, 44b), in die der vorragende Abschnitt (22d, 22e) eingesetzt ist, wobei die erste Nut (42a, 44a, 42b, 44b) an einer Außenumfangsfläche der Rotorwelle vorgesehen ist, um sich in einer Achsenrichtung durch den Außengewindeabschnitt (34) zu dem Einsetzabschnitt (32) hin zu erstrecken; und
eine Mutter (50), die in den Außengewindeabschnitt (34) geschraubt ist,
**dadurch gekennzeichnet, dass**
die Mutter (50) einen ersten gekrimpten Abschnitt (50a, 50c) hat, der gekrimpt ist, um in die erste Nut (42a, 44a, 42b, 44b) einzutreten, und
ein Teil (42a, 42b) der ersten Nut (42a, 44a, 42b, 44b), in die der vorragende Abschnitt (22d, 22e) eingesetzt ist, eine größere Tiefe in einer radialen Richtung der Rotorwelle als der andere Teil (44a, 44b) der ersten Nut (42a, 44a, 42b, 44b) hat, in die der erste gekrimpte Abschnitt (50a, 50c) eintritt.

2. Rotor (22) nach Anspruch 1, wobei
die Rotorwelle eine zweite Nut (44b, 44d) in dem Außengewindeabschnitt (34) an einer Position hat, die von der ersten Nut (42a, 44a, 42b, 44b) getrennt ist, und
die Mutter (50) einen zweiten gekrimpten Abschnitt (50b, 50d) hat, der gekrimpt ist, um in die zweite Nut (44b, 44d) einzutreten.

3. Rotor (20) nach Anspruch 1, wobei der andere Teil (44a, 44b) der ersten Nut (42a, 44a, 42b, 44b) eine größere Breite in einer Umfangsrichtung der Rotorwelle als der eine Teil (42a, 42b) der ersten Nut (42a, 44a, 42b, 44b) hat.

4. Rotor (20) nach Anspruch 1 oder 3, wobei der eine Teil (42a, 42b) der ersten Nut (42a, 44a, 42b, 44b) in einem axialen Bereich des Einsetzabschnitts (32) und des Außengewindeabschnitts (34) ausgebildet ist und wobei der andere Teil (44a, 44b) der ersten Nut (42a, 44a, 42b, 44b) lediglich in einem axialen Bereich des Außengewindeabschnitts (34) ausgebildet ist.

5. Rotor (20) nach Anspruch 1, wobei die erste Nut (42a, 44a, 42b, 44b) einen größeren Nutquerschnitt senkrecht zu der Achsenrichtung in dem Bereich des Außengewindeabschnitts (34) als in dem Bereich des Einsetzabschnitts (32) hat.

6. Rotor (20) nach einem von Ansprüchen 1 bis 5, wobei zwei radial vorragende Abschnitte (22d, 22e) in einem Winkel von 180 Grad in der Umfangsrichtung des zylindrischen Lochs (22b) des Rotorkerns (22) angeordnet sind.

7. Rotor (20) nach einem von Ansprüchen 1 bis 6, wobei zweite Nuten (44b, 44d) an Positionen, die von den ersten Nuten (42a, 44a, 42b, 44b) getrennt sind, und bei Winkeln von 90 Grad hinsichtlich benachbarter zweiter Nuten (44a, 44b) in der Umfangsrichtung der Rotorwelle (30) angeordnet sind.

## Revendications

1. Rotor (20) pour une machine électrique rotative, le rotor (20) comprenant :
un noyau de rotor (22) ayant un trou cylindrique (22b), le noyau de rotor (22) ayant une partie radialement en saillie (22d, 22e) sur une surface périphérique interne du trou cylindrique (22b) ;
un arbre de rotor (30) comprenant :
une partie d'insertion (32) qui est insérée dans le trou cylindrique (22b) du noyau de rotor (22),
une partie de filetage externe (34) qui s'étend à partir de la partie d'insertion (32) jusqu'à un côté externe dans une direction axiale, la partie de filetage externe (34) ayant une crête de filetage (34a) sur une surface périphérique externe, et
une première rainure (42a, 44a, 42b, 44b) dans laquelle la partie en saillie (22d, 22e) est insérée, la première rainure (42a, 44a, 42b, 44b) étant prévue sur une surface périphérique externe de l'arbre de rotor afin de s'étendre dans une direction axiale à travers la partie de filetage externe (34) jusqu'à la partie d'insertion (32) ; et
un écrou (50) vissé dans la partie de filetage externe (34),
**caractérisé en ce que** :
l'écrou (50) a une première partie sertie (50a, 50c) sertie afin d'entrer dans la première rainure (42a, 44a, 42b, 44b), et
une partie (42a, 42b) de la première rainure (42a, 44a, 42b, 44b) dans laquelle la partie en saillie (22d, 22e) est insérée, a une profondeur plus importante dans la direction radiale de l'arbre de rotor que l'autre partie (44a, 44b) de la première rainure (42a, 44a, 42b, 44b) dans laquelle la première partie sertie (50a, 50c) pénètre.

2. Rotor (20) selon la revendication 1, dans lequel :
l'arbre de rotor a une seconde rainure (44b, 44d) dans la partie de filetage externe (34) dans une position séparée de la première rainure (42a, 44a, 42b, 44b), et
l'écrou (50) a une première partie sertie (50b, 50d) qui est sertie afin de pénétrer dans la seconde rainure (44b, 44d).

3. Rotor (20) selon la revendication 1, dans lequel l'autre partie (44a, 44b) de la première rainure (42a, 44a, 42b, 44b) a une profondeur plus importante dans la direction circonférentielle de l'arbre de rotor que la une partie (42a, 42b) de la première rainure (42a, 44a, 42b, 44b).

4. Rotor (20) selon la revendication 1 ou 3, dans lequel la une partie (42a, 42b) de la première rainure (42a, 44a, 42b, 44b) est formée dans une région axiale de la partie d'insertion (32) et une partie de filetage externe (34), et dans lequel l'autre partie (44a, 44b) de la première rainure (42a, 44a, 42b, 44b) est uniquement formée dans une région axiale de la partie de filetage externe (34).

5. Rotor (20) selon la revendication 1, dans lequel la première rainure (42a, 44a, 42b, 44b) a une section transversale de rainure plus importante perpendiculaire à la direction axiale dans la région de la partie de filetage externe (34) que dans la région de la partie d'insertion (32).

6. Rotor (20) selon l'une quelconque des revendications 1 à 5, dans lequel deux parties radialement en saillie (22d, 22e) sont agencées à un angle de 180 degrés dans la direction circonférentielle du trou cylindrique (22b) du noyau de rotor (22).

7. Rotor (20) selon l'une quelconque des revendications 1 à 6, dans lequel les secondes rainures (44b, 44d) sont agencées dans des positions séparées des premières rainures (42a, 44a, 42b, 44b) et à des angles de 90 degrés par rapport aux secondes rainures (44a, 44b) voisines dans la direction circonférentielle de l'arbre de rotor (30).
